# EUROPEAN PATENT APPLICATION

(11) **EP 4 206 773 A1**
(43) Date of publication of application: **05.07.2023**
(21) Application number: 22216290.1
(22) Date of filing: 23.12.2022
(51) Int. Cl.: G02B 6/44

(54) **FIRE RETARDANT STRENGTH MEMBER FOR OPTICAL FIBER CABLES AND MANUFACTURING METHOD THEREOF**

(30) Priority: 28.12.2021 IN 202111061171
(71) Applicant: Sterlite Technologies Limited, Haryana 122002 (IN)
(72) Inventor: Marru, Pramod, 122002 Gurugram (IN)
(74) Representative: Petraz, Gilberto Luigi

(57) **Abstract**

The present disclosure relates to a strength member (202, 302) for use in an optical fiber cable and manufacturing method. In particular, the manufacturing method includes coating one or more strength yarns with the polymer matrix and curing the polymer matrix, blending inorganic filler in the third wet bath of the resin followed by two wet baths of the resin only and the resin is cured after each wet bath. Moreover, the polymer matrix is a blend of resin and an inorganic filler reinforced with one or more yarns. Further, the resin is a polyurethane resin and the inorganic filler is Magnesium Hydroxide, Aluminium Trihydrate, Zinc borate, Antimony Trioxide, Ammonium Polyphosphate, molybdate based filler and clay nanocomposite.

## Description

### TECHNICAL FIELD

Embodiments of the present disclosure relate to the field of telecommunications optical cables and more particularly, relates to a fire retardant strength member for optical fiber cables and manufacturing method thereof.

This application claims the benefit of Indian Application No. 202111061171 titled **"Fire Retardant Strength Member For Optical Fiber Cables And Manufacturing Method Thereof**" filed by the applicant on 28/12/2021, which is incorporated herein by reference in its entirety.

### BACKGROUND ART

Telecommunications networks include access networks where end-user subscribers connect to service providers. To meet increasing consumer demands, bandwidth requirements for providing high-speed data and video services over access networks are growing rapidly. In many situations, communication through optical fibers has emerged as a preferred technique for high-speed information transmission.

Optical fiber cables are a critical component of modern communication networks across the globe. Currently, an optical fiber used for an optical fiber communication system adopts a structure in which an outer periphery of a core is surrounded by a clad, and an optical signal propagates in this core to transmit information. As the amount of information to be transmitted increases, the optical fiber communication system uses several tens to several hundreds of multiple optical fibers to perform long-distance optical communication of large capacity.

In order to qualify for a particular application, such as indoor and/or outdoor applications, the optical fiber cables undergo stringent fire tests. The cables, especially those in the areas of authority and applications with stringent fire regulations (for fire and smoke), are designed to minimize the spread of fire, smoke, toxic gases and other fire hazards. In order to prevent such a mishap, the cable elements that are highly combustible need to be replaced with fire retardant versions that are not/less combustible. In particular, reducing the amount of flammable material would reduce the potential of insulation, fiber optic buffering, and jacket materials to spread flames and smoke to adjacent plenum areas and potentially to more distant and widespread areas in a building. Currently, thick sheaths of flame-retardant material are used to block flames from entering the core components of the cables.

A strength member is one such element that is combustible and can contribute to higher fire risks. Strength layers and/or strength members add mechanical strength to fiber optic cables to protect the internal optical fibers against stresses applied to the cables during installation and thereafter. Examples of strength layers/strength members include aramid yam, steel, glassreinforced plastic (GRP), and epoxy reinforced glass roving. However, these structures, that of the polyester binder yarns, and structures, such as air gaps in the core, may facilitate the spreading of smoke and flame. As the strength members burn away in case of a mishap, the highly flammable internal components will be exposed and will continue to burn and/or allow burning droplets to drip out of the structure unprotected by the strength members.

One way to address the aforesaid problem is to coat the strength member with fire retardant materials. For example, high burn performance materials such as polyvinylidene fluoride (PVDF) may be used for this purpose. Moreover, flame-retardant barrier tapes can also be employed for the same.

Japanese patent application no. JP2009172995A titled "Thermoplastic resin-coated FRP cable and method of manufacturing the same" discloses coating of the strength members with a fire retardant resin.

US patent application no. US8625947B1 titled "Low-smoke and flame-retardant fiber optic cables" discloses fiber optic cables including reinforcing materials that generate low smoke levels and exhibit improved performance during burn testing. In particular, the strength members (i.e., a reinforcing material) includes a polymeric matrix material.

US patent application no. US10825580B2 titled "Compositions for compounding, extrusion and melt processing of foamable and cellular halogenfree polymers" discloses a strength member formed using a solid polyethylene or other suitable plastic, textile (nylon, aramid, etc.), fibreglass flexible or rigid (FGE rod), or metallic material.

However, there are a number of drawbacks in the currently similar technologies employing the coating of the strength member with fire retardant materials. First, the materials used in the conventional strength member have a high smoke density and poor burn performance, which is not suitable for use in optical fiber cables. A few of the currently similar technologies employ high burn performance materials such as polyvinylidene fluoride (PVDF) to avoid burns, however, it increases the cost of producing the fiber optic cable. Further, the use of flame-retardant barrier tapes also adds to the cost of manufacturing the cable, increases the overall processing complexity, and also creates another structural layer that can complicate cable access.

In the light of the above-stated discussion, there is an urgent need for a technical solution that overcomes the above-stated limitations in the prior arts. The present disclosure focuses on providing a cost-effective and efficient polymer matrix composition for coating a strength member in an optical fiber cable.

### SUMMARY OF THE DISCLOSURE

Embodiments of the present disclosure provide strength member for use in an optical fiber cable comprising a polymer matrix reinforced with one or more yarns. In particular, the polymer matrix is a blend of resin and an inorganic filler. Moreover, the strength member produces a smoke density of less than 170 at heat flux 50kW/m² for 20 minutes.

According to the first aspect,the inorganic filler is one or more of Magnesium Hydroxide, Aluminium Trihydrate, Zinc borate, Antimony Trioxide, Ammonium Polyphosphate, molybdate based filler and clay nanocomposite.

In accordance with an embodiment of the present disclosure, the inorganic filler is blended with 1 to 100 phr (parts per Hundred Resin) in the resin.

According to a second aspect of the present disclosure, the resin is a polyurethane resin.

According to the third aspect of the present disclosure, the time of ignition for the strength member is up to 120 seconds at a heat flux of 50kW/m².

In accordance with an embodiment of the present disclosure, the strength member has a total heat release of less than 80 MJ/m² at the heat flux of 50kW/m².

According to the fourth aspect of the present disclosure, the resin has a viscosity less than or equal to 200 mPa.s at 25°C.

In accordance with an embodiment of the present disclosure, the inorganic filler has a particle size greater than or equal to 0.25 micron.

In accordance with an embodiment of the present disclosure, the inorganic filler has a temperature of decomposition less than or equal to 700° C.

In accordance with an embodiment of the present disclosure, Magnesium Hydroxide and Aluminium Trihydrate are blended with a phr of 50 to 100 and Zinc borate, Antimony Trioxide, Ammonium Polyphosphate, molybdate based filler and clay nanocomposite are blended with a phr of 1 to 10 in the resin.

According to the fifth aspect of the present disclosure, a method of manufacturing a strength member comprising the steps of coating one or more strength yarns with a polymer matrix and curing the polymer matrix. In particular, the strength member produces a smoke density of less than 170 at heat flux 50kW/m² for 20 minutes.

In accordance with an embodiment of the present disclosure, the polymer matrix is a blend of resin and an inorganic filler.

In accordance with an embodiment of the present disclosure, the inorganic filler is one or more of Magnesium Hydroxide, Aluminium Trihydrate, Zinc borate, Antimony Trioxide, Ammonium Polyphosphate, molybdate based filler and clay nanocomposite.

In accordance with an embodiment of the present disclosure, the resin is a polyurethane resin.

In accordance with an embodiment of the present disclosure, one or more strength yarns are any aramid yarns and glass roving yarns.

In accordance with an embodiment of the present disclosure, the inorganic filler is blended with 1 to 100 phr (parts per Hundred Resin) in the resin.

In accordance with an embodiment of the present disclosure, the inorganic filler is blended in the third wet bath of the resin followed by two wet baths of the resin only.

In accordance with an embodiment of the present disclosure, the resin is cured after each wet bath.

In accordance with the embodiment of the present disclosure, the resin is cured by ultraviolet radiation or heat radiation.

The foregoing solutions of the present disclosure are attained by employing a fire retardant strength member for optical fiber cables and the manufacturing method thereof.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a block diagram illustrating components of a system for manufacturing a strength member in accordance with an embodiment of the present disclosure
Fig. 2 is a snapshot illustrating an exemplary optical fiber cable in accordance with an embodiment of the present disclosure;
Fig. 3 is a snapshot illustrating an exemplary optical fiber cable in accordance with an embodiment of the present disclosure;
Fig. 4 is a flow chart illustrating a method for manufacturing the strength member in accordance with the embodiment of the present disclosure.

### REFERENCE LIST

System for manufacturing a strength member - 100
Pay-off unit - 102
Coating and curing unit - 104
Take-up unit - 106
Optical fiber cable - 200, 300
Strength member - 202, 302
Outer layer (sheath/jacket) - 304

The strength member for optical cables is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

### Following terms shall apply throughout the present disclosure:

Optical fiber refers to a medium associated with the transmission of information over long distances in the form of light pulses. The optical fiber uses light to transmit voice and data communications over long distances when encapsulated in a jacket/sheath. The optical fiber may be of ITU.T G.657.A2 category. Alternatively, the optical fiber may be of ITU.T G.657.A1 or G.657.B3 or G.652.D or other suitable categories.

ITU.T stands for International Telecommunication Union-Telecommunication Standardization Sector, is one of the three sectors of the ITU. The ITU is the United Nations specialized agency in the field of telecommunications and is responsible for studying technical, operating and tariff questions and issuing Recommendations on them with a view to standardizing telecommunications on a worldwide basis.

Curing is a process that produces toughening or hardening of a material, such as a polymer matrix/material by cross-linking of polymer chains.

Smoke density determines the volume of smoke generated when cables are burned.

Heat flux (aka thermal flux, heat flux density, heat-flow density or heat flow rate intensity) is a flow of energy per unit of area per unit of time.

Total heat release defines the maximum release rate of heat during a combustion process

Time-to-ignition is an important fire reaction property because it defines how quickly flaming combustion of material will occur when exposed to a heat source.

Crush resistance is an ability of a cable to withstand and/or recover from the effects of a compressive force.

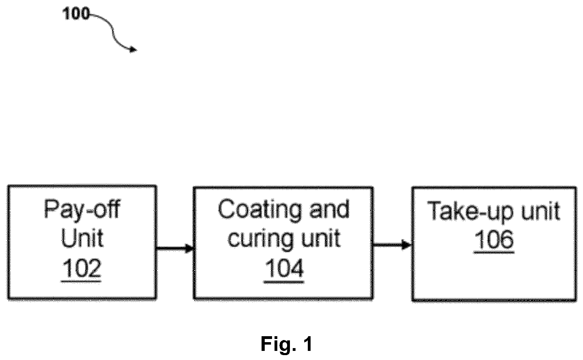

Fig. 1 is a block diagram illustrating components of a system 100 for manufacturing a strength member in accordance with an embodiment of the present disclosure. System 100 may include a pay-off unit 102, a coating and curing unit 104 and a take-up unit 106. In particular, the pay-off unit 102 may be a rotating platform, vertical axis flyer type pay-off unit, horizontal axis flyer type pay-off unit, high-speed pay-off unit. Moreover, the pay-off unit 102 continuously pay-off one or more strength yarns to the coating and curing unit 104. Strength yarns may be one of the aramid yarns, glass roving yarns or any suitable yarn known to a person skilled in fiber optic art.

In accordance with the embodiment of the present disclosure, the coating and curing unit 104 include a suitably dimensioned die flooded with a polymer matrix material (interchangeably "polymer matrix"). The coating and curing unit 104 also include a forming and curing die for curing the polymer matrix coated one or more strength yarns. Further, the coating and curing unit 104 may include a resin bath where one or more strength yarns are coated with the polymer matrix (resin), which then passed through the forming and curing die where one or more strength yarns are given a desired shape and are cured. Though the coating and curing unit 104 is as a single unit, alternatively the coating and curing unit 104 may be separate units without limiting the scope of the present disclosure.

In accordance with the embodiment of the present disclosure, the polymer matrix material is a blend of resin and an inorganic filler. In particular, the resin maybe, but not limited to, a polyurethane resin. Moreover, the resin may have a viscosity less than or equal to 200 mPa.s at 25°C. Alternatively, the viscosity of the resin may vary. Further, the inorganic filler may be a fire retardant material. Such low viscosity of the resin supports higher dissolution of the inorganic filler that further enhances the fire retardancy.

In accordance with the embodiment of the present disclosure, the inorganic filler maybe, but not limited to, one or more magnesium hydroxide, aluminium trihydrate, zinc borate, antimony trioxide, ammonium polyphosphate, molybdate based filler and clay nanocomposite. In particular, the inorganic filler may have a particle size greater than or equal to 0.25 micron. Alternatively, the particle size of the inorganic filler may vary. Moreover, the inorganic filler may have a temperature of decomposition less than or equal to 700° C. Alternatively, the temperature of decomposition of the inorganic filler may vary. Further, the temperature of decomposition of a substance is the temperature at which the substance chemically decomposes.

In accordance with the embodiment of the present disclosure, the coating and curing unit 104 is configured to perform coating and curing of one or more strength yarns. Initially, one or more strength yarns may be bathed with the resin and then curing may be performed by the coating and curing unit 104. Phe Particularly, the resin may be cured using thermal/heat or UV (ultraviolet) curing.

In accordance with the embodiment of the present disclosure, the process of coating and curing is a repetitive process. After the first round of bathing and curing, the coating and curing unit 104 performs a second round of bathing using the resin and curing of one or more strength yarns. Moreover, the coating and curing unit 104 perform the curing followed by bathing of the bathed and cured one or more strength yarns with a blend of the resin and the inorganic filler. Further, the inorganic filler may be blended in the third wet bath of the resin followed by two wet baths of the resin only and the resin may be cured after each wet bath, thereby resulting in the strength member.

In accordance with the embodiment of the present disclosure, bathing maybe, but is not limited to, wet bathing.

In an embodiment of the present disclosure, the inorganic filler is blended with the resin in the third wet bath after the first and second wet baths of resin and curing. Alternatively, blending of the inorganic fillers in the resin may be done in the first wet bath, the second wet bath or any suitable combination of wet baths.

In accordance with the embodiment of the present disclosure, the inorganic filler is blended with 1 to 100 phr (Parts per Hundred Resin) in the resin. Magnesium Hydroxide and Aluminium Trihydrate is blended with a phr of 50 to 100 and Zinc borate, Antimony Trioxide, Ammonium Polyphosphate, molybdate based filler and clay nanocomposite may be blended with a phr of 1 to 10 in the resin. Alternatively, the value of phr may vary.

In accordance with the embodiment of the present disclosure, the take-up unit 106 is configured to take up the coated and cured strength member. In particular, the strength member produces a smoke density of less than 170 at heat flux 50kW/m² for 20 minutes. Alternatively, the smoke density may vary. Further, time of ignition (time-to-ignition) for the resultant strength member may be up to 120 seconds at the heat flux of 50kW/m². Alternatively, the time of ignition may vary. Furthermore, the resultant strength member may have a total heat release of less than 80 MJ/m² at the heat flux of 50kW/m². Alternatively, the total heat release of the strength member may vary.

In accordance with the embodiment of the present disclosure, the strength member is an embedded strength member or central strength member of an optical fiber cable.

Advantageously, the resultant strength member has high fire retardancy due to the addition of the inorganic fillers without reducing the required tensile strength and stiffness. Moreover, strength member provides mechanical strength, rigidity and stiffness to the optical fiber cable. Further, the strength member provide enhanced break load and excellent crush protection/resistance performance.

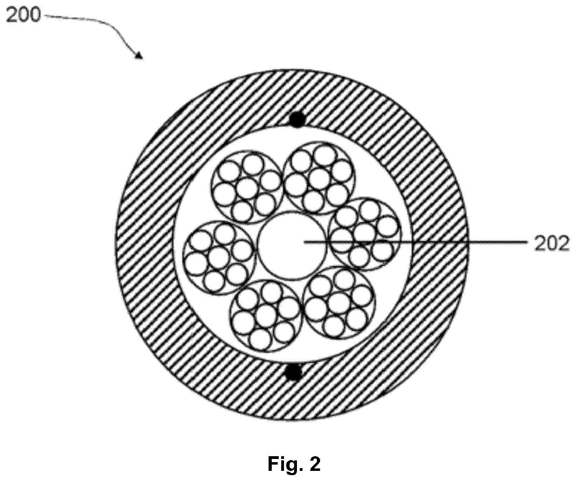

Fig. 2 is a snapshot illustrating an exemplary optical fiber cable 200 in accordance with an embodiment of the present disclosure. The exemplary optical fiber cable 200 has a central strength member 202 is formed by the above procedure.

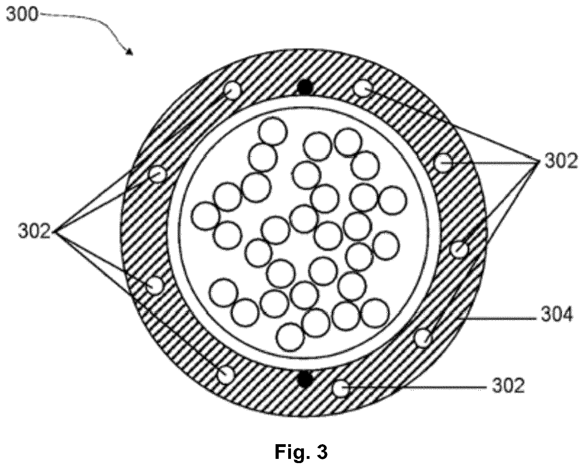

Fig. 3 is a snapshot illustrating an exemplary optical fiber cable 300 in accordance with an embodiment of the present disclosure. The exemplary optical fiber cable 300 includes a plurality of strength members 302 embedded in an outer layer (sheath/jacket) 304. In particular, the sheath is made from materials such as, but not limited to, polyvinylchloride, polyethylene (such as High Density Poly Ethylene (HDPE), Medium Density Poly Ethylene, and Low Density Poly Ethylene), polyurethane, thermoplastic rubber/elastomer, thermoplastic chlorinated polyethylene, Low Smoke Zero Halogen (LSZH) or combination thereof.

In accordance with the embodiment of the present disclosure, the strength member may be made of, but not limited to, FRP (Fiber Reinforced Plastic), ARP (Aramid Reinforced Plastic) or any other suitable dielectric/strength material. The strength member may have a round shape, a flat shape or any other suitable shape.

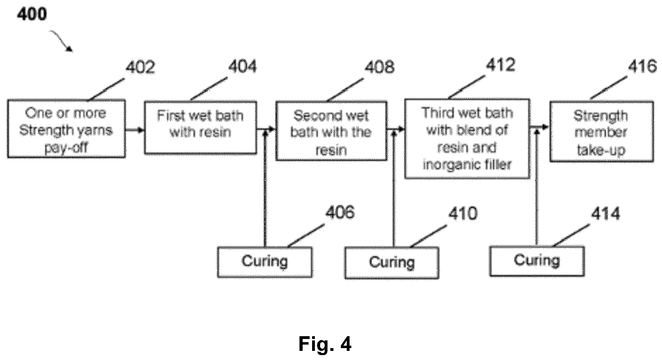

Fig. 4 is a flow chart 400 illustrating a method for manufacturing the strength member in accordance with the embodiment of the present disclosure.

At step 402, the pay-off unit 102 continuously pay-off one or more strength yarns to the coating and curing unit 104. In particular, the coating and curing unit 104 may perform coating of one or more strength yarns with the polymer matrix and curing of the polymer matrix.

From Step 404 to step 414, the coating and curing unit 104 is configured to perform coating and curing of one or more strength yarns.

At step 404, the coating and curing unit 104 is configured to wet bath one or more strength yarns with the resin.

At step 406, curing is performed by coating and curing unit 104 on the wet bathed one or more strength yarns. The process of coating and curing is repeated.

At step 408 and at step 410, after the first round of bathing and curing the coating and curing unit 104 performs the second round of wet bathing using the resin and curing of one or more strength yarns respectively.

At step 412 and at step 414, the coating and curing unit 104 perform the curing followed by wet bathing of the bathed and cured one or more strength yarns with the blend of the resin and the inorganic filler.

At step 416, the coated and cured strength member is taken up by the take-up unit 106.

The various actions, acts, blocks, steps, or the like in the flow chart 400 may be performed in the order presented, in a different order or simultaneously. Further, in some implementations, some of the actions, acts, blocks, steps, or the like may be omitted, added, modified, skipped, or the like without departing from the scope of the present disclosure.

Advantageously, the present disclosure proposes to make an optical fiber cable fire retardant by making strength members fire retardant made using polyurethane resin that has a smoke density of less than 170. Use of the fire retardant strength member facilitates the use of low filled LSZH (Low Smoke Zero Halogen) jacket which enhances the mechanical strength of the optical fiber cable.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments.

It will be apparent to those skilled in the art that other embodiments of the disclosure will be apparent to those skilled in the art from consideration of the specification and practice of the disclosure. While the foregoing written description of the disclosure enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above described embodiment, method, and examples, but by all embodiments and methods within the scope of the disclosure. It is intended that the specification and examples be considered as exemplary, with the true scope of the disclosure being indicated by the claims.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A strength member (202, 302) for use in an optical fiber cable, **characterized in that**:
a polymer matrix reinforced with one or more yarns, wherein the polymer matrix is a blend of a resin and an inorganic filler,
whereby the strength member produces a smoke density of less than 170 at heat flux 50kW/m² for 20 minutes.
wherein the inorganic filler is one or more of Magnesium Hydroxide, Aluminium Trihydrate, Zinc borate, Antimony Trioxide, Ammonium Polyphosphate, molybdate based filler and clay nanocomposite; and
wherein the resin is a polyurethane resin.

2. The strength member (202, 302) as claimed in claim 1, wherein the inorganic filler is blended with 1 to 100 phr (Parts per Hundred Resin) in the resin.

3. The strength member (202, 302) as claimed in claim 1, wherein time of ignition for the strength member is up to 120 seconds at heat flux of 50kW/m².

4. The strength member (202, 302) as claimed in claim 1, wherein the strength member has a total heat release of less than 80 MJ/m² at heat flux of 50kW/m².

5. The strength member (202, 302) as claimed in claim 1, wherein the resin has a viscosity less than or equal to 200 mPa.s at 25°C.

6. The strength member (202, 302) as claimed in claim 1, wherein the inorganic filler has a particle size of greater than or equal to 0.25 micron.

7. The strength member (202, 302) as claimed in claim 1, wherein the inorganic filler has a temperature of decomposition less than or equal to 700° C.

8. The strength member (202, 302) as claimed in claim 1, wherein Magnesium Hydroxide and Aluminium Trihydrate are blended with a phr of 50 to 100 and Zinc borate, Antimony Trioxide, Ammonium Polyphosphate, molybdate based filler and clay nanocomposite are blended with a phr of 1 to 10 in the resin.

9. A method of manufacturing a strength member, **characterized in that** steps of:
coating one or more strength yarns with a polymer matrix, and
curing of the polymer matrix; wherein the polymer matrix is a blend of a resin and an inorganic filler.
whereby the strength member produces a smoke density of less than 170 at heat flux 50kW/m² for 20 minutes.

10. The method as claimed in claim 9, wherein the inorganic filler is one or more of Magnesium Hydroxide, Aluminium Trihydrate, Zinc borate, Antimony Trioxide, Ammonium Polyphosphate, molybdate based filler and clay nanocomposite and the resin is a polyurethane resin.

11. The method as claimed in claim 9, wherein the one or more strength yarns are one of aramid yarns and glass roving yarns.

12. The method as claimed in claim 9, wherein the inorganic filler is blended with 1 to 100 phr (Parts per Hundred Resin) in the resin.

13. The method as claimed in claim 12, wherein the inorganic filler is blended in third wet bath of the resin followed by two wet baths of the resin only.

14. The method as claimed in claim 9, wherein the resin is cured after each wet bath and the resin is cured by ultraviolet radiation or heat radiation.

15. The method as claimed in claim 9, wherein the inorganic filler has a temperature of decomposition less than or equal to 700° C.
